(19) Europäisches Patentamt
European Patent Office
Office européen des brevets

(11) EP 1 471 758 A1

(12) **DEMANDE DE BREVET EUROPEEN**

(43) Date de publication:
**27.10.2004 Bulletin 2004/44**

(51) Int Cl.$^7$: **H04Q 7/38**, H04L 1/00

(21) Numéro de dépôt: **04009197.7**

(22) Date de dépôt: **19.04.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **25.04.2003 FR 0305110**

(71) Demandeur: **Nortel Networks Limited**
**St. Laurent, Quebec H4S 2A9 (CA)**

(72) Inventeurs:
- **Laune, Marthe**
  **75017 Paris (FR)**
- **Cayla, Stéphane**
  **78220 Viroflay (FR)**

(74) Mandataire: **Ameline, Jean-Paul et al**
**Nortel Networks S.A**
**Intellectual Property Law Group-CT34,**
**Parc d'activités de Magny-Chateaufort,**
**Chateaufort**
**F-78928 Yvelines Cedex 9 (FR)**

(54) **Procédé et unité de contrôle des changements de schéma de codage (coding scheme CS) dans un système de radiocommunication**

(57) Dans un système de radiocommunication, les données échangées sont protégées contre les erreurs de transmission selon un schéma de protection sélectionné en tenant compte d'une indication selon laquelle une transition depuis un schéma de protection est autorisée ou interdite. Pour au moins une station de base dudit système :

- on mesure, pour des stations mobiles ayant des liens radio respectifs avec ladite station de base, des paramètres relatifs à des conditions de propagation sur lesdits liens radio, et entre lesdites stations mobiles et au moins une station de base voisine de ladite station de base ;
- on met à jour l'indication relative aux transitions pour les liens radio avec la station de base, de manière à ce qu'au moins une transition soit considérée comme autorisée si un critère, fonction des paramètres mesurés, est rempli, et interdite si ledit critère n'est pas rempli.

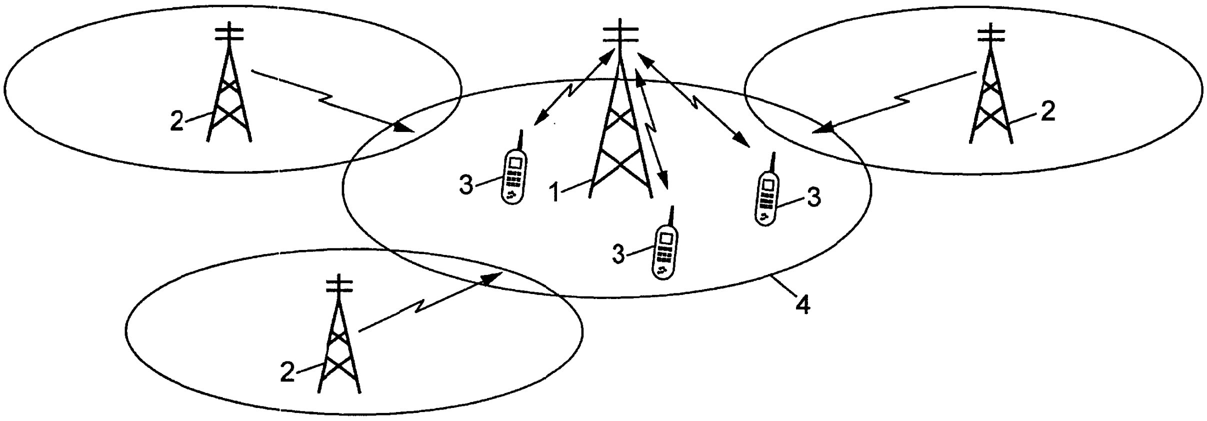


*FIG. 3*

EP 1 471 758 A1

## Description

La présente invention concerne un procédé de contrôle de liens radio dans un système de radiocommunication. Elle concerne plus particulièrement le mode de protection de liens radio contre les erreurs de transmission.

Certains systèmes de radiocommunication comprennent différents niveaux de protection contre les erreurs des données transmises. Le système GPRS ("General Packet Radio Service") par exemple permet de transmettre, entre une station de base et une station mobile, des blocs de signal modulé pouvant faire l'objet d'une protection variable contre les erreurs de transmission. Le niveau de protection est sélectionné bloc par bloc par le choix d'un schéma de codage CS ("Coding Scheme") parmi quatre schémas CS-1 à CS-4 spécifiés dans la norme européenne ETSI EN 300 909, Digital cellular telecommunications system (Phase 2+) ; Channel coding (GSM 05.03, version 8.5.1, Release 1999), publiée par l'ETSI ("European Telecommunications Standards Institute") en novembre 2000. Le schéma de codage CS-1 est le plus robuste aux erreurs de transmission, mais aussi celui qui autorise le débit utile le plus faible pour la transmission de données à laquelle il est affecté. A l'inverse, le schéma de codage CS-4 est le moins robuste aux erreurs, puisqu'il ne contient pas de protection particulière, mais aussi celui qui autorise le débit utile de transmission le plus élevé.

Une unité de contrôle, appelée PCU ("Packet Control Unit") est le plus souvent chargée du choix d'un schéma de codage. Ce choix peut être basé sur une optimisation du débit offert pour chaque transmission et doit prendre en compte les conditions de la transmission entre les stations concernées. Ainsi, si la qualité de transmission est médiocre sur les canaux radio utilisés, il sera préférable d'utiliser un schéma robuste pour s'assurer de la transmission des données. En revanche, si les conditions de propagation ne sont pas entachées d'erreurs, il sera judicieux de choisir un schéma privilégiant le débit de transmission des données. Un tel choix peut être effectué en cours de communication, entraînant la sélection d'un nouveau schéma de codage plus adapté que l'ancien.

Pour ce faire, l'unité de contrôle peut se baser sur un certain nombre de mesures représentatives de la qualité de transmission, qui lui sont envoyées par les stations de base pour les liens radio montants (station mobile vers station de base), et/ou par les stations mobiles pour les liens radio descendants (station de base vers station mobile).

Toutefois, les mesures prévues dans le système GPRS notamment sont limitées et peu adaptées aux contraintes de la transmission de données en mode paquet. A titre d'exemple, ces mesures sont imprécises au point qu'elles ne permettent pas au PCU de choisir efficacement entre certains schémas de codage, comme entre le CS-3 et le CS-4 par exemple. Si les mesures relevées indiquent que les conditions radio sont ponctuellement favorables sur un lien radio, le CS-4 pourra être sélectionné pour ce lien. Cependant, en cas de dégradation soudaine des conditions radio, la fréquence des mesures s'avérera parfois insuffisante pour que le PCU sélectionne un schéma de codage plus robuste de façon réactive, ce qui pourra provoquer la perte de la communication en cours sur le lien radio considéré.

En outre, les mesures prévues dans le système GPRS ne permettent pas à elles seules de déterminer avec précision les seuils de transition entre schémas de codage, si bien que ces seuils doivent être établis à partir de mesures manuelles d'autant plus complexes qu'elles doivent être effectuées idéalement dans la zone de service de chaque station de base du réseau exploité.

Cette situation a amené certains opérateurs de systèmes de radiocommunication à inhiber les changements de schéma de codage, en fixant un schéma de codage pour tous les liens radio (souvent le CS-2). Un tel mode de fonctionnement est sous-optimal, à la fois en termes de protection contre les erreurs de transmission et de débit utile, puisqu'il ne prend pas en compte les variations des conditions de propagation au cours du temps ni les spécificités locales du réseau (plan de fréquences, configuration des stations de base, environnement de type urbain ou rural, etc.).

Un but de la présente invention est de limiter les inconvénients susmentionnés, pour obtenir un bon compromis entre le débit utile des transmissions de données et la protection des données contre les erreurs de transmission.

Un autre but de l'invention est de permettre une sélection dynamique du niveau de protection pour des liens radio, basée sur des critères plus fiables que les simples mesures habituelles et qui évitent d'avoir à mener des campagnes lourdes de mesures de qualification du réseau.

L'invention propose ainsi un procédé de contrôle de liens radio dans un système de radiocommunication comprenant des stations de base et des stations mobiles, chaque station mobile étant agencée pour entretenir un lien radio avec une station de base serveuse parmi lesdites stations de base et pour recevoir des signaux émis par des stations de base voisines de la station serveuse parmi lesdites stations de base, les liens radio supportant des signaux, représentant des données protégées contre les erreurs de transmission selon un schéma de protection sélectionné parmi plusieurs schémas de protection déterminés, la sélection d'un schéma de protection sur un lien radio tenant compte d'une indication selon laquelle une transition depuis un schéma de protection précédemment alloué audit lien radio est autorisée ou interdite, le procédé comprenant les étapes suivantes pour au moins une station de base du système de radiocommunication :

- mesurer, pour des stations mobiles ayant des liens radio respectifs avec ladite station de base, des paramètres

relatifs à des conditions de propagation sur lesdits liens radio d'une part et des paramètres relatifs à des conditions de propagation entre iesdites stations mobiles et au moins une station de base voisine de ladite station de base d'autre part ;

- mettre à jour l'indication relative aux transitions pour les liens radio avec ladite station de base, de manière à ce qu'au moins une transition soit considérée comme autorisée si un critère, fonction des paramètres mesurés, est rempli, et interdite si ledit critère n'est pas rempli.

Un tel procédé permet notamment d'éviter des transitions qui pourraient s'avérer nuisible à la qualité des liens radio correspondant, compte tenu de l'environnement radio. Il permet, à l'inverse, d'autoriser des transitions qui ne présentent que peu de risques pour la qualité des liens radio.

Le critère servant de base à la décision d'autorisation ou d'interdiction d'une transition pour tous les liens radio avec la station de base est avantageusement une estimation d'un rapport signal sur bruit, dans lequel l'interférence est éventuellement surévaluée, pour réduire les risques de prise de décision inadéquate.

Ce critère peut faire intervenir un paramètre faisant l'objet d'une analyse statistique sur une période d'observation. Cette analyse peut être effectuée une fois pour toute ou bien de façon régulière, notamment pour prendre en compte des modifications du réseau.

L'invention propose également une unité de contrôle dans un système de radiocommunication comprenant des stations de base et des stations mobiles, chaque station mobile étant agencée pour entretenir un lien radio avec une station de base serveuse parmi lesdites stations de base et pour recevoir des signaux émis par des stations de base voisines de la station serveuse parmi lesdites stations de base, les liens radio supportant des signaux, représentant des données, l'unité de contrôle comprenant des moyens pour protéger les données contre les erreurs de transmission en leur appliquant, sur le lien radio correspondant, un schéma de protection qu'elle sélectionne parmi plusieurs schémas de protection déterminés en tenant compte d'une indication selon laquelle une transition depuis un schéma de protection précédemment alloué audit lien radio est autorisée ou interdite, l'unité de contrôle comprenant en outre :

- des moyens pour obtenir un critère sur la base de mesures, pour des stations mobiles ayant des liens radio respectifs avec au moins une station de base du système de radiocommunication, de paramètres relatifs à des conditions de propagation sur lesdits liens radio d'une part et de paramètres relatifs à des conditions de propagation entre lesdites stations mobiles et au moins une station de base voisine de ladite station de base d'autre part ;

- des moyens pour mettre à jour l'indication relative aux transitions pour les liens radio avec ladite station de base, comprenant des moyens pour considérer au moins une transition comme autorisée si ledit critère est rempli, et comme interdite si ledit critère n'est pas rempli.

D'autres particularités et avantages de la présente invention apparaîtront dans la description ci-après d'exemples de réalisation non limitatifs, en référence aux dessins annexés, dans lesquels :

- la figure 1 est un schéma d'un réseau de type GPRS auquel l'invention peut s'appliquer ;
- la figure 2 est un schéma synoptique d'une unité de contrôle de paquets d'un tel réseau, adaptée à la mise en oeuvre de l'invention ;
- la figure 3 est un schéma d'architecture simplifiée de réseau radio mettant en oeuvre l'invention.

L'invention est décrite ci-après dans son application, non exclusive, à des réseaux GPRS. Ces réseaux ont été développés pour permettre la transmission de données en mode paquets dans des réseaux cellulaires de type GSM (« Global System for Mobile communications »). On considérera plus particulièrement la transmission de paquets dans le sens descendant, c'est-à-dire de l'infrastructure du réseau vers les stations mobiles.

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système de stations de base ou BSS (« Base Station Subsystem »).

Pour le service de paquets, les commutateurs du NSS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux extérieurs de transmission de paquets, tels que par exemple le réseau Internet.

Une description générale de l'interface radio, appelée Um, entre les stations mobiles (MS) 10 et les stations de base (BTS) 20 du BSS est fournie dans la spécification technique ETSI TS 101 350, « Digital cellular telecommunications system (Phase 2+) ; General Packet Radio Service (GPRS) ; Overall description of the GPRS radio interface ; Stage 2 (GSM 03.64, version 8.5.0, Release 1999), publiée par l'ETSI (European Télécommunications Standards Institute) en août 2000.

Chaque station de base 20 est supervisée par un contrôleur de stations de base ou BSC (« Base Station Controller ») 21 par l'intermédiaire d'une interface appelée Abis. Pour gérer la transmission de paquets GPRS, le BSS comprend en outre une unité de contrôle de paquets (PCU) 22. La localisation du PCU à l'intérieur du BSS n'est pas normalisée. Dans l'exemple représenté sur la figure 1, le PCU 22 est situé entre le BSC 21, avec lequel il communique à travers une interface appelée Agprs, et le NSS, avec lequel il communique à travers l'interface Gb.

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20 à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et la BTS 20, les informations sont portées par des trames de type TRAU (« Transcoder/Rate Adaptor Unit ») de 320 bits. Ces trames TRAU sont mises en forme et traitées par un module 44 et transmises par l'intermédiaire de circuits d'interface synchrone 45 qui réalisent des sous-voies MIC à 16 kbit/s avec les BTS 20. Dans les systèmes GSM, les voies à 64 kbit/s (DS0) sont habituellement subdivisées en quatre sous-voies dédiées chacune à un canal physique sur la radio. Plusieurs canaux (sous-voies) à 16 kbit/s sont multiplexés dans le temps sur l'interface Agprs et commutés par le BSC 21 pour l'acheminement vers les BTS.

Un module 46 du contrôleur d'interface Agprs 42 met en oeuvre les protocoles radio de la couche 2 du modèle ISO, à savoir les protocoles RLC/MAC (« Radio Link Control / Médium Access Control ») décrits dans la norme européenne ETSI EN 301 349, Digital cellular telecommunications system (Phase 2+) ; General Packet Radio Service (GPRS) ; Mobile Station (MS) - Base Station System (BSS) interface ; Radio Link Control/Medium Access Control (RLC/MAC) protocol (GSM 04.60, version 8.3.1, Release 1999), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

Dans le sens descendant, du PCU vers les MS, l'en-tête MAC de chaque bloc RLC/MAC inclut :

- un champ USF de trois bits (« Uplink State Flag »), servant à indiquer quelle station mobile est autorisée à utiliser une ressource montante correspondant à la ressource descendante sur laquelle est transmise le bloc RLC/MAC ;
- un champ de contrôle d'acquittement de trois bits, incluant un sous-champ d'un bit S/P (« Supplementary/Polling ») indiquant si le champ de contrôle d'acquittement est actif (S/P = 1) ou inactif (S/P = 0) et un sous-champ de deux bits RRBP (« Relative Reserved Block Period ») spécifiant de manière unique un bloc montant dans lequel la station mobile destinataire doit transmettre un message d'acquittement ;
- un champ « Payload Type » de deux bits spécifiant le type de bloc RLC suivant (données, contrôle, ...).

On s'intéresse ici à la transmission de blocs de données RLC. Chacun de ces blocs comporte un en-tête RLC suivant l'octet d'en-tête MAC. Cet en-tête RLC comporte notamment les informations suivantes :

- identité de flux temporaire TFI (« Temporary Flow Identity »), composée de cinq bits identifiant le flux de blocs temporaire (TBF, « Temporary Block Flow ») d'où proviennent les données RLC du bloc. Un TBF est une connexion supportant le transfert unidirectionnel de LLC-PDU sur des canaux physiques de données. Un TBF est temporaire, c'est-à-dire qu'il n'est maintenu que pendant le transfert de données ;
- un numéro de séquence du bloc BSN (« Bloc Sequence Number ») de SNS bits, qui contient le numéro de séquence du bloc RLC/MAC dans le TBF, *modulo* $2^{SNS}$, SNS étant un nombre prédéfini.

La sous-couche MAC gère en outre le multiplexage des blocs relevant des différents TBF actifs sur les canaux physiques disponibles, en arbitrant entre les différents utilisateurs mobiles par un mécanisme de planification (« scheduling »).

Dans le cas du GPRS, un niveau de protection variable contre les erreurs de transmission sur la radio peut être sélectionné bloc par bloc à l'intérieur d'un TBF, par le choix d'un schéma de codage CS (« Coding Scheme ») parmi quatre schémas CS-1 à CS-4 spécifiés dans la norme européenne ETSI EN 300 909, Digital cellular telecommunications system (Phase 2+); Channel coding (GSM 05.03, version 8.5.1, Release 1999), publiée par l'ETSI en novembre 2000.

Le schéma CS-4 n'utilise pas de codage correcteur d'erreurs, c'est-à-dire que le rendement de codage vaut 1 : seule une séquence de vérification de bloc (BCS « Block Check Sequence >>) est adjointe aux blocs de données. Les schémas CS-1 à CS-3 utilisent un code convolutif de rendement 1/2 après l'adjonction de la séquence BCS. Aucun poinçonnage n'est effectué dans le schéma CS-1 (qui offre le plus haut niveau de protection), tandis que des poinçonnages sont appliqués dans les schémas CS-2 et CS-3 afin qu'ils donnent lieu à des rendements de codage globaux d'environ 2/3 et d'environ 3/4, respectivement.

Le codage de canal CS-i ($1 \leq i \leq 4$) est appliqué au niveau du protocole de couche physique, c'est-à-dire dans les BTS pour les liaisons descendantes. Chaque BTS comporte au moins une unité d'émission/réception (TRX) traitant huit canaux physiques multiplexés. Le multiplexage de ces huit canaux physiques est à partage temporel de type TDMA (« Time-Division Multiple Access »), avec des trames successives de 4,615 ms décomposées chacune en huit tranches temporelles. Un canal physique correspond à des tranches temporelles de rang correspondant dans la structure de trame. La fréquence d'émission sur un tel canal peut être fixe, ou variable d'une trame à l'autre si une méthode de saut de fréquence est appliquée. Chaque bloc RLC/MAC donne lieu à un bloc radio qui, après le codage de canal dans une unité TRX, se compose de 456 bits transmis dans des tranches temporelles correspondantes de quatre trames TDMA consécutives. Les 114 bits d'information codée de chaque tranche temporelle sont modulés pour être transmis sur l'interface radio selon une modulation par déplacement de phase à deux états de type GMSK (« Gaussian Minimum Shift Keying »).

Pour un canal physique de données (PDCH, « Physical Data Channel »), une multitrame dure 240 ms et se compose de 52 trames TDMA dont quatre sont inactives ou servent à la transmission d'informations de contrôle. Il y a ainsi douze blocs radio par multitrame, soit un bloc radio toutes les 20 ms.

Un motif de huit bits de signalisation SB est inséré dans chaque bloc radio (deux bits par tranche temporelle) afin d'indiquer notamment quel schéma de codage a été appliqué par l'émetteur.

Ces bits de signalisation sont extraits du bloc codé reçu par le destinataire, pour lui permettre d'identifier le schéma de codage. Le récepteur procède alors au décodage adéquat du bloc qui pourra donner lieu à un acquittement positif s'il est réussi et si la BCS décodée est cohérente avec le contenu du bloc.

Le Tableau I indique les débits de données offerts par les schémas de codage CS-1 à CS-4 d'un système GPRS.

TABLEAU I

| Schéma | Débit (kbit/s) |
|---|---|
| CS-1 | 9,05 |
| CS-2 | 13,4 |
| CS-3 | 15,6 |
| CS-4 | 21,4 |

Le schéma de codage appliqué sur la liaison descendante est déterminé par le PCU en fonction de mesures de qualité de réception sur le lien radio. Une telle détermination peut utiliser des mécanismes d'adaptation de lien connus en soi, qui cherchent à atteindre un objectif en termes de taux de blocs erronés afin d'optimiser le débit brut. Le schéma sélectionné est inséré dans la trame TRAU portant le bloc pour être appliqué par la BTS.

Le schéma de codage appliqué peut être modifié en cours de communication sur un lien radio, notamment lorsque les mesures effectuées sur le lien font état de changements de la qualité de réception.

Selon l'invention, le PCU autorise les transitions entre certains schémas de protection et en interdit d'autres. Il peut stocker, pour chaque station de base sous sa responsabilité, une indication des transitions autorisées ou interdites, si bien que, lorsque le besoin d'un changement de schéma de protection est détecté, la détermination du nouveau schéma de protection la prend en compte. Par exemple, la transition entre CS-3 et CS-4 (c'est-à-dire de CS-3 à CS-4 et de CS-4 à CS-3) étant difficile à gérer, comme évoqué en introduction, sur la base des mesures de qualité de réception sur un lien radio, elle peut donc être avantageusement interdite.

Ainsi, un lien radio utilisant le CS-3 ne pourra se voir affecter le CS-4 pour poursuivre sa communication, même si les conditions radio sont plus favorables. Cette inhibition permet d'éviter une prise de décision inadaptée qui pourrait mettre la communication en danger si l'amélioration des conditions radio s'avère inexacte ou éphémère. De même, le passage de CS-4 à CS-3 pour un lien radio peut également être considéré comme interdit le cas échéant. A l'inverse, d'autres transitions entre des schémas de protection sont considérées par le PCU comme étant autorisées : par exemple, les transitions entre CS-1 et CS-2.

L'indication selon laquelle une transition entre schémas de protection est autorisée ou interdite peut aussi être modifiée dans certaines conditions, comme cela sera décrit par la suite.

La figure 3 illustre un exemple de réseau radio pour la mise en oeuvre de l'invention. Sur cet exemple, une BTS 1 est en communication, sur des liens radio respectifs, avec des MS 3 se trouvant dans sa zone de service 4. La BTS 1 envoie ainsi des signaux portant les données à transmettre aux différentes MS 3. Selon un mécanisme classique de contrôle de la puissance, la BTS 1 peut réduire la puissance de son émission vers une ou plusieurs MS 3, par rapport à une valeur de puissance maximale, en fonction des conditions radio sur chaque lien. On note Att_pwc cette atténuation de puissance en dB.

Par ailleurs, les MS 3 effectuent des mesures de la qualité de réception sur les liens respectifs qu'ils entretiennent avec la BTS 1, de façon connue en soi. En particulier, chaque MS 3 relève un niveau de signal reçu depuis la BTS 1, comme cela est décrit par exemple à la section 8.1 de la spécification technique 100 911, version 5.10.0, "Radio Subsystem Link Control", (Release 1996), publiée en septembre 2000 par l'organisation ETSI ("European Télécommunications Standards Institute"). On note RxLev_DL le niveau de signal mesuré en dBm. Un rapport de mesures est effectué régulièrement vers le réseau, conformément à la section 8.4 de la spécification technique 100 911.

Parallèlement aux mesures effectuées sur les signaux en provenance de la BTS 1, qui sert la cellule 4 où se situent les MS 3, ces derniers réalisent en outre des mesures de niveau de signal en provenance des BTS 2 des cellules voisines, de façon connue en soi. On note RxLev_Ncell(i), le niveau de signal en dBm mesuré par une MS 3 en provenance d'une BTS 2 d'une cellule voisine i parmi les cellules voisines déclarées pour la BTS 1. De la même façon que pour RxLev_DL, les RxLev_Ncell(i) relevés sont reportés au réseau par chaque MS 3, de manière à y être traitées.

Les différentes mesures évoquées ci-dessus sont transmises au réseau où elles font l'objet d'un traitement. Ce traitement consiste avantageusement à calculer, pour chaque ensemble de mesures remontées par des MS 3, un paramètre Clbgt égal à :

$$\text{Clbgt} = (\text{RxLev_DL} + \text{Att_pwc}) - \sum_i (\text{RxLev_Ncell}(i)).$$

Clbgt représente ainsi une différence entre le signal utile issu de la BTS 1 et un niveau d'interférence, représenté par une somme linéaire de signaux interféreurs, qui prend comme hypothèse que toutes les cellules voisines déclarées de la BTS 1 utilisent la même fréquence. Ce paramètre constitue donc un pire cas et ne dépend pas du plan de fréquences en vigueur, c'est-à-dire de la répartition des fréquences allouées dans le réseau. Ce paramètre est avantageusement obtenu à partir de toutes les MS 3 dans la zone de service 4 de la BTS 1, même si elles ne supportent pas la fonctionnalité GPRS, puisque les mesures susmentionnées sont effectuées également pour des terminaux GSM simples sans capacité GPRS.

Le paramètre Clbgt peut être calculé par le PCU dont dépend la BTS 1 ou bien, s'il est calculé par une autre entité, comme le BSC qui contrôle le BTS 1 ou la BTS 1 elle-même, il peut être transmis au PCU.

Une distribution cumulée du paramètre Clbgt peut être ainsi obtenue sur une période de temps d'observation. En fonction de cette distribution, on peut qualifier la cellule 4. En effet, une forte proportion d'échantillons ayant une valeur faible signifie que le niveau d'interférence est globalement élevé en comparaison du signal utile. Inversement, une forte proportion d'échantillons ayant une valeur élevée est significative d'un rapport signal / interférences favorable. Dans le cas où la distribution cumulée est obtenue dans le BSC qui contrôle le BTS 1 ou dans la BTS 1 elle-même, cette distribution peut être transmise au PCU.

Avantageusement, un seuil est défini pour le paramètre Clbgt, par exemple 12 dB. En fonction de la proportion d'échantillons dans la distribution cumulée qui dépasse ce seuil, le PCU peut alors décider de modifier certaines autorisations ou interdictions de transitions entre schémas de codage. A titre illustratif, la transition entre CS-2 et CS-4 (c'est-à-dire de CS-2 vers CS-4 ou de CS-4 vers CS-2) peut être considérée comme autorisée si 95 % des échantillons du paramètre Clbgt sont au-dessus du seuil. En effet, dans ce cas, le signal utile est prédominant par rapport à l'interférence maximale. Un passage du CS-2 au CS-4 pour les communications des MS 3 avec la BTS 1 ne présente pas de risque important à court terme. En revanche, si la tendance est inverse et la proportion de Clbgt au-dessus du seuil est faible, par exemple inférieure à 95%, le PCU pourra interdire la transition entre CS-2 et CS-4. De la même façon, la transition entre CS-2 et CS-3 peut avantageusement faire l'objet d'une indication d'autorisation ou d'interdiction.

Selon une variante, la transition faisant l'objet d'une autorisation ou d'une inhibition concerne le passage d'un premier schéma de codage vers un second schéma de codage moins robuste que le premier, tandis que la transition inverse du second au premier schéma de codage est gérée de façon indépendante. Par exemple, la transition de CS-2 vers CS-4 peut être inhibée, alors que la transition de CS-4 vers CS-2 reste possible.

La qualification d'une cellule peut être effectuée une fois pour toute de manière à déterminer les transitions entre schémas de protection qui peuvent y être mises en oeuvre. Dans un autre mode de fonctionnement, la qualification est remise à jour régulièrement lors d'une nouvelle période d'observation. Une telle mise à jour est notamment utile pour prendre en compte une nouvelle configuration du réseau à proximité de la BTS considérée (par exemple lors d'un ajout de BTS) ou lors d'une modification des cellules voisines déclarées pour cette BTS.
Comme indiqué plus haut, le paramètre Clbgt présente de l'intérêt, dans la mesure où il représente un pire cas du rapport signal / interférences. Toutefois, tout autre paramètre basé sur les mesures radio transmises au réseau et permettant de qualifier une cellule peut également être utilisé pour définir un critère de qualité de la cellule, en fonction duquel des transitions entre schémas de protection seront autorisées ou interdites.
Par ailleurs, des systèmes autres que le GPRS peuvent utiliser des schémas de protection pour transmettre des données. De la même façon, un critère adapté pourra être défini selon l'invention pour permettre certaines transitions entre des schémas de protection et pour en interdire d'autres.

## Revendications

1. Procédé de contrôle de liens radio dans un système de radiocommunication comprenant des stations de base (1,2) et des stations mobiles (3), chaque station mobile étant agencée pour entretenir un lien radio avec une station de base serveuse parmi lesdites stations de base et pour recevoir des signaux émis par des stations de base voisines de la station serveuse parmi lesdites stations de base, les liens radio supportant des signaux, représentant des données protégées contre les erreurs de transmission selon un schéma de protection sélectionné parmi plusieurs schémas de protection déterminés, la sélection d'un schéma de protection sur un lien radio tenant compte d'une indication selon laquelle une transition depuis un schéma de protection précédemment alloué audit lien radio est autorisée ou interdite, le procédé comprenant les étapes suivantes pour au moins une station de base du système de radiocommunication :

   - mesurer, pour des stations mobiles ayant des liens radio respectifs avec ladite station de base, des paramètres relatifs à des conditions de propagation sur lesdits liens radio d'une part et des paramètres relatifs à des conditions de propagation entre lesdites stations mobiles et au moins une station de base voisine de ladite station de base d'autre part ;

   - mettre à jour l'indication relative aux transitions pour les liens radio avec ladite station de base, de manière à ce qu'au moins une transition soit considérée comme autorisée si un critère, fonction des paramètres mesurés, est rempli, et interdite si ledit critère n'est pas rempli.

2. Procédé selon la revendication 1, dans lequel les paramètres relatifs à des conditions de propagation comprennent des niveaux de signal émis par ladite station de base d'une part et par les stations de base voisines de ladite station de base d'autre part et dans lequel la mesure desdits paramètres est effectuée par lesdites stations mobiles.

3. Procédé selon la revendication 1 ou 2, dans lequel le critère est rempli lorsqu'une distribution cumulée sur une période de temps d'observation pour un paramètre égal à

$$(RxLev_DL + Att_pwc) - \sum_i (RxLev_Ncell(i))$$

   comporte une proportion d'échantillons supérieure à un seuil, où RxLev_DL représente un niveau de signal émis par ladite station de base mesuré par les stations mobiles, Att_pwc représente une atténuation du signal émis par ladite station de base à l'émission et RxLev_Ncell(i) représente un niveau de signal émis par la station de base i voisine de ladite station de base mesuré par les stations mobiles.

4. Procédé selon la revendication 3, dans lequel la distribution cumulée est mise à jour périodiquement.

5. Procédé selon l'une quelconque des revendications précédentes, dans lequel la transition considérée comme autorisée ou interdite lors de la mise à jour de l'indication relative aux transitions est une transition depuis un premier schéma de protection vers un second schéma de protection moins robuste que le premier schéma de protection.

**6.** Procédé selon l'une quelconque des revendications précédentes, dans lequel le système de radiocommunication supporte le service GPRS ("General Packet Radio Service") et dans lequel un schéma de protection est sélectionné parmi quatre schémas de protection du service GPRS, respectivement CS-1 à CS-4.

**7.** Procédé selon la revendication 6, dans quel, la transition de CS-3 vers CS-4 et la transition de CS-4 vers CS-3 sont interdites.

**8.** Procédé selon la revendication 6 ou 7, dans lequel la transition considérée comme autorisée si un critère est rempli, et interdite si ledit critère n'est pas rempli, est une transition entre CS-2 et CS-4.

**9.** Procédé selon l'une quelconque des revendications 6 à 8, dans lequel la transition considérée comme autorisée si un critère est rempli, et interdite si ledit critère n'est pas rempli, est une transition entre CS-2 et CS-3.

**10.** Unité de contrôle (22) dans un système de radiocommunication comprenant des stations de base (1,2) et des stations mobiles (3), chaque station mobile étant agencée pour entretenir un lien radio avec une station de base serveuse parmi lesdites stations de base et pour recevoir des signaux émis par des stations de base voisines de la station serveuse parmi lesdites stations de base, les liens radio supportant des signaux, représentant des données, l'unité de contrôle comprenant des moyens pour protéger les données contre les erreurs de transmission en leur appliquant, sur le lien radio correspondant, un schéma de protection qu'elle sélectionne parmi plusieurs schémas de protection déterminés en tenant compte d'une indication selon laquelle une transition depuis un schéma de protection précédemment alloué audit lien radio est autorisée ou interdite, l'unité de contrôle comprenant en outre :

- des moyens pour obtenir un critère sur la base de mesures, pour des stations mobiles ayant des liens radio respectifs avec au moins une station de base du système de radiocommunication, de paramètres relatifs à des conditions de propagation sur lesdits liens radio d'une part et de paramètres relatifs à des conditions de propagation entre lesdites stations mobiles et au moins une station de base voisine de ladite station de base d'autre part ;

- des moyens pour mettre à jour l'indication relative aux transitions pour les liens radio avec ladite station de base, comprenant des moyens pour considérer au moins une transition comme autorisée si ledit critère est rempli, et comme interdite si ledit critère n'est pas rempli.

**11.** Unité de contrôle selon la revendication 10, dans laquelle les paramètres relatifs à des conditions de propagation comprennent des niveaux de signal émis par ladite station de base d'une part et par les stations de base voisines de ladite station de base d'autre part, dans laquelle les mesures desdits paramètres sont effectuées par lesdites stations mobiles, l'unité de contrôle comprenant des moyens pour recevoir les mesures desdits paramètres depuis lesdites stations mobiles.

**12.** Unité de contrôle selon la revendication 10 ou 11, comprenant en outre des moyens pour calculer une distribution cumulée sur une période de temps d'observation pour un paramètre égal à

$$(RxLev_DL + Att_pwc) - \sum_i (RxLev_Ncell(i)),$$

où RxLev_DL représente un niveau de signal émis par ladite station de base mesuré par les stations mobiles, Att_pwc représente une atténuation du signal émis par ladite station de base à l'émission et RxLev_Ncell(i) représente un niveau de signal émis par la station base i voisine de ladite station de base mesuré par les stations mobiles, et dans laquelle ledit critère est rempli lorsque la distribution cumulée comporte une proportion d'échantillons supérieure à un seuil.

**13.** Unité de contrôle selon la revendication 12, comprenant des moyens pour mettre à jour périodiquement la distribution cumulée.

**14.** Unité de contrôle selon l'une quelconque des revendications 10 à 13, dans laquelle la transition concernée par les moyens pour considérer au moins une transition comme autorisée si ledit critère est rempli, et comme interdite si ledit critère n'est pas rempli, est une transition depuis un premier schéma de protection vers un second schéma

de protection moins robuste que le premier schéma de protection.

**15.** Unité de contrôle selon l'une quelconque des revendications 10 à 14, dans laquelle le système de radiocommunication supporte le service GPRS ("General Packet Radio Service"), et dans laquelle les schémas de protection déterminés parmi lesquels l'unité de contrôle sélectionne un schéma de protection sont les quatre schémas de protection du service GPRS, respectivement CS-1 à CS-4.

**16.** Unité de contrôle selon la revendication 15, dans laquelle les moyens pour considérer au moins une transition comme autorisée si ledit critère est rempli, et comme interdite si ledit critère n'est pas rempli, considèrent la transition de CS-3 vers CS-4 et la transition de CS-4 vers CS-3 comme interdites.

**17.** Unité de contrôle selon la revendication 15 ou 16, dans laquelle les moyens pour considérer au moins une transition comme autorisée si ledit critère est rempli, et comme interdite si ledit critère n'est pas rempli, visent une transition entre CS-2 et CS-4.

**18.** Unité de contrôle selon l'une quelconque des revendications 15 à 17, dans laquelle les moyens pour considérer au moins une transition comme autorisée si ledit critère est rempli, et comme interdite si ledit critère n'est pas rempli, visent une transition entre CS-2 et CS-3.

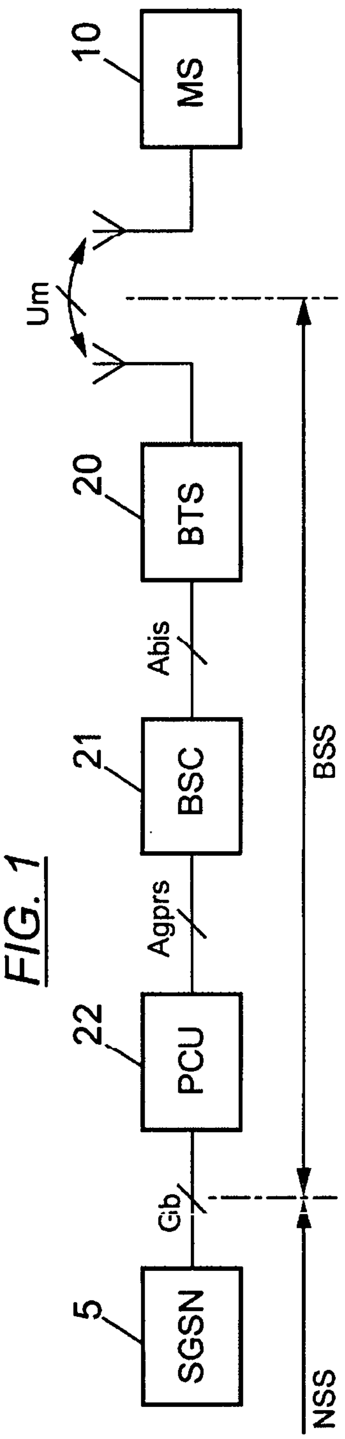
SGSN
5
PCU
22
BSC
21
BTS
20
MS
10
Gb
Agprs
Abis
Um
NSS
BSS

FIG. 1

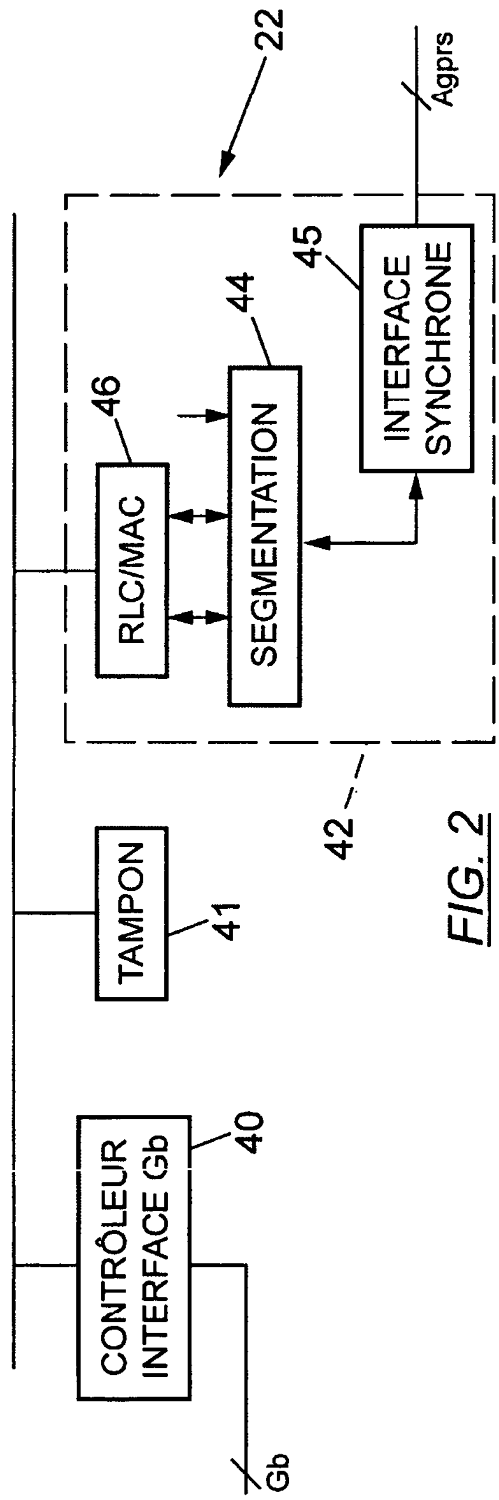
CONTRÔLEUR INTERFACE Gb
40
TAMPON
41
RLC/MAC
46
SEGMENTATION
44
INTERFACE SYNCHRONE
45
22
42
Gb
Agprs

FIG. 2

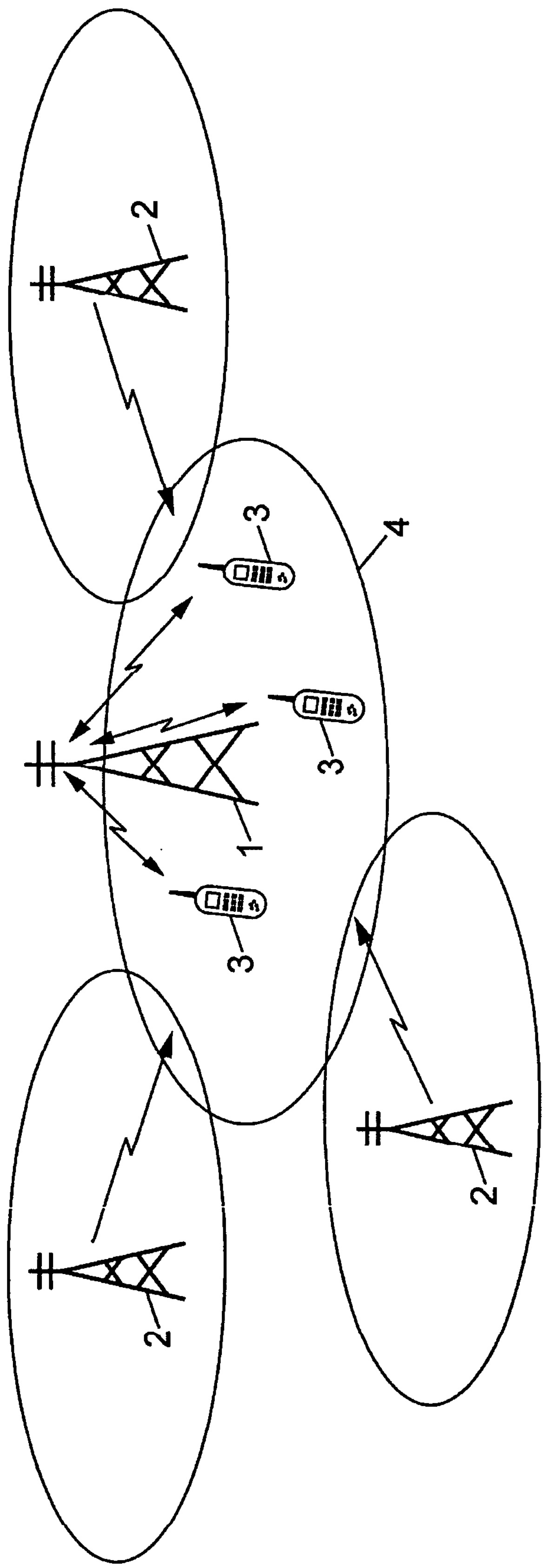


FIG. 3

Office européen des brevets

# RAPPORT DE RECHERCHE EUROPEENNE

Numéro de la demande
EP 04 00 9197

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 167 031 A (THIELECKE JOERN ET AL) 26 décembre 2000 (2000-12-26)<br>* abrégé *<br>* figure 2 *<br>* colonne 1, ligne 43 - colonne 2, ligne 55 *<br>* colonne 4, ligne 40 - colonne 5, ligne 17 *<br>--- | 1,2, 5-11, 14-18 | H04Q7/38<br>H04L1/00 |
| A | EP 1 255 368 A (SIEMENS INF & COMM NETWORKS) 6 novembre 2002 (2002-11-06)<br>* abrégé *<br>* alinéa [0023] - alinéa [0026] *<br>--- | 1-18 | |
| A | US 6 308 082 B1 (MALMGREN GOERAN ET AL) 23 octobre 2001 (2001-10-23)<br>* colonne 1, ligne 43 - colonne 5, ligne 30 *<br>* abrégé *<br>* revendication 1 *<br>--- | 1-18 | **DOMAINES TECHNIQUES RECHERCHES (Int.Cl.7)** |
| A | EP 1 372 290 A (EVOLIUM S A S) 17 décembre 2003 (2003-12-17)<br>* abrégé *<br>* alinéa [0001] - alinéa [0015] *<br>----- | 1-18 | H04Q<br>H04L |

Le présent rapport a été établi pour toutes les revendications

| Lieu de la recherche | Date d'achèvement de la recherche | Examinateur |
|---|---|---|
| MUNICH | 12 mai 2004 | Wolf, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO. EP 04 00 9197

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2004

| Document brevet cité au rapport de recherche | | Date de publication | Membre(s) de la famille de brevet(s) | | | Date de publication |
|---|---|---|---|---|---|---|
| US 6167031 | A | 26-12-2000 | AU | 9012598 | A | 22-03-1999 |
| | | | BR | 9811397 | A | 22-08-2000 |
| | | | CA | 2300884 | A1 | 11-03-1999 |
| | | | CN | 1277764 | T | 20-12-2000 |
| | | | DE | 69811091 | D1 | 06-03-2003 |
| | | | DE | 69811091 | T2 | 09-10-2003 |
| | | | EP | 1010288 | A1 | 21-06-2000 |
| | | | JP | 3375943 | B2 | 10-02-2003 |
| | | | JP | 2001515307 | T | 18-09-2001 |
| | | | WO | 9912304 | A1 | 11-03-1999 |
| | | | TW | 410514 | B | 01-11-2000 |
| EP 1255368 | A | 06-11-2002 | EP | 1255368 | A1 | 06-11-2002 |
| | | | WO | 02091655 | A1 | 14-11-2002 |
| | | | EP | 1384344 | A1 | 28-01-2004 |
| | | | US | 2004081248 | A1 | 29-04-2004 |
| US 6308082 | B1 | 23-10-2001 | AU | 761352 | B2 | 05-06-2003 |
| | | | AU | 1301700 | A | 26-04-2000 |
| | | | CA | 2345291 | A1 | 13-04-2000 |
| | | | CN | 1322421 | T | 14-11-2001 |
| | | | EP | 1118182 | A1 | 25-07-2001 |
| | | | JP | 2002527938 | T | 27-08-2002 |
| | | | WO | 0021235 | A1 | 13-04-2000 |
| EP 1372290 | A | 17-12-2003 | EP | 1372290 | A1 | 17-12-2003 |
| | | | CN | 1468012 | A | 14-01-2004 |
| | | | US | 2003232630 | A1 | 18-12-2003 |

EPO FORM P0460

Pour tout renseignement concernant cette annexe : voir Journal Officiel de l'Office européen des brevets, No.12/82